# EUROPEAN PATENT APPLICATION

(11) **EP 1 834 864 A1**
(43) Date of publication of application: **19.09.2007**
(21) Application number: 06005432.7
(22) Date of filing: 16.03.2006
(51) Int. Cl.: B62H 5/14

(54) **Ring lock for bicycles with armouring parts and means for locking the latch bolt of a loop padlock**

(71) Applicant: Luma Industrias, S.A., 20120 Hernani (Guipuzcoa) (ES)
(72) Inventor: Muerza Munilla, Alfredo, 20011 San Sebastian, Guipuzcoa (ES)
(74) Representative: Urizar Barandiaran, Miguel Angel

(57) **Abstract**

Bicycle padlock characterised in that the body of the lock (4) is covered by a hardened steel armouring that consists of a front armour (10), a back armour and an upper armour (12). There is an arched armour (15) made of hardened steel that is inserted between the traction spring (8) proper and the front wall of the front half-housing (1a).
Inside the locking body (4) there is a lever (18) capable of blocking a typical termination (19) of a locking loop padlock.

## Description

### FIELD OF THE INVENTION

This invention concerns a padlock for bicycles of the type known in the sector as a "ring lock", which is installed on the bicycle's chassis in such a way that, when it is closed, it prevents turning of the corresponding bicycle wheel by interfering with turning of the wheel's spokes.

### PRIOR ART

A general structure of this type of padlock consists of an annular housing that is fixed on the bicycle's chassis in such a way that it widely surrounds the section of one of its wheels comprising the tyre and the rim, permitting passage through said tyre and, diametrically opposite to this opening, the annular housing presents a locking body that is tangentially arranged to it and which incorporates a key lock which, by means of an eccentric edge, is capable of preventing, at least, a closed padlock position in which a locking arc, which was previously housed inside said annular housing by the elastic retracting action of a helical tension spring, this internal locking arc is impelled by means of an external pulling element so as to partially protrude until it crosses between the wheel spokes, closing said opening, described below as the front or rear visible face of the padlock installed on the bicycle and as the back or rear face the one applied to its chassis, said annular housing consisting of the combination of a front half-housing and a back half-housing.

This type of padlock is commonly factory-installed on the bicycle chassis and is very common in countries such as Holland, Belgium, Germany and the Nordic Countries, where use of the bicycles as a habitual means of transport within cities is highly extended. It use is not so extended in other countries and, even where minor use is made of it, the trend is moving towards this means of transport for getting around towns (work, shopping, leisure, etc.) in order to achieve cleaner air.

The problem is that current designs of this type of padlock are not very robust and, despite the incorporation of this means of security, nowadays a large number of bicycles is subject to theft, up to the point where, wherever this means of transport is very extensive, the volume of thefts is so considerable that insurance companies are penalising padlocks that are easy to force open by raising the price of insurance premiums as a means of promoting the development of more secure padlocks.

One of the problems is that there is a groove through which the pulling element runs to enable movement of the arc that locks the padlock; by means of this groove, it is possible to force open the lock, all the more so because the half-housings are not particularly resistant. To try to resolve this problem, the German patent DE 2604732 C3 eliminated the groove. Another reason is that the half-housings are linked by rivets, which can be broken without any great difficulty. Another reason is that, as the locking arc and the half-housings are not particularly resistant, there is a lack of armouring.

The aim of this invention is to achieve this goal on the basis of an already familiar design that belongs to the public domain which, at the time, was supported by the German patent DE 26 04 732 C3, by improving it to eliminate other reasons for a lack of security.

### EXPLANATION OF THE INVENTION AND ADVANTAGES

In view of prior art, the object of this invention is a bicycle padlock of the "ring lock" type that is based on the general structure of the German patent cited, on the basis of which improvements are introduced to ensure a much more secure final structure.

For this purpose, in accordance with the present invention, the body of the lock is covered by a hardened steel armouring that consists of a front armour, a back armour and an upper armour; because said external pulling element is incorporated in the end of an arched plate that extends parallel to the locking arc with an effective length that is adequate for the distance covered by it and, at its other end, this arched plate has means of connection that are shared with the end of said locking arc which, in turn, is linked to a termination of said tension spring whose other termination is anchored inside the annular housing; and because, over all the extension embraced by the tension spring, there is an arched armour made of hardened steel that is inserted between the traction spring proper and the front wall of the front half-housing. Here, said front armour covers the top and front faces of the locking body and also internally covers the inside wall of the annular housing in the entire zone corresponding to the vertical projection of this locking body, and said armour has the shape of an inverted box that externally covers the front and back armours, embracing the entire lateral contour of the locking body, all faces of which are covered.

This structure now advocated offers armouring to prevent attacks with a drill or saw, completely protecting the periphery of the lock's body, which is the element that houses the locking mechanism. This solution is much more secure than the one detailed in the German patent, which lacks armouring. Moreover, it affords special protection to the zone where the spring is located in the annular housing.

On the other hand, said front and back half-housings are made of metal of a considerable thickness and are welded; this in itself offers greater security than joining by rivets as used in previous constructions and, moreover, the half-housings are now more resistant (2mm thick); the locking arc will now also be thicker and harder. In this respect, the invention also provides for a realisation in which said front and back half-housings form peripheral edges towards the outside that are capable of resting on one another and of being joined by welding.

In another respect, the padlock advocated integrates an additional function which consists of the fact that, in operative conjunction with said key lock, in said lock body there is a lever that is capable of blocking, inside itself, a typical termination of a locking loop padlock. This means that, in addition to immobilising the bicycle wheel, the original purpose of this padlock proposed makes it possible for the bicycle itself to be secured to an element external to it, for example a traffic light pole or other fixed anchors or means intended for this purpose.

These and other particularities of the invention are elucidated in the following detailed description.

### DRAWINGS AND REFERENCES

To enable a better comprehension of the nature of the present invention, on the drawings attached we present a preferable form of industrial realisation, this having a merely illustrative and non-limiting character.
Figure 1 is an exploded drawing of a padlock according to the invention shown from its front half-housing (1a).
Figure 2 is a view similar to the one in Figure 1, but viewed from the back half-housing (1b).
Figure 3 is an orthogonal project of the padlock shown in Figures 1 and 2, according to section III-III indicated in Figure 4; in it, the padlock is shown open and a section of the top part of a bicycle wheel (2) is incorporated as well as a termination (19) of a locking loop padlock.
Figure 4 is the view according to the section IV-IV indicated in Figure 3, but without the bicycle wheel (2).
Figure 5 is the same as Figure 3, but showing the padlock closed.
Figure 6 shows the right-hand of a padlock according to the invention, but without the front (20) and back (21) exterior armours.
Figure 7 shows the padlock indicated in Figure 6, but provided with the front (20) and back (21) exterior armours.
Figure 8 is the front view of the padlock shown in Figure 7, in the closed state and with the suggested incorporation of the key (5a) of the lock (5) and of a typical termination (19) belonging to locking loop padlocks.

The following references are indicated in these figures:
1 - Annular housing
1a - Front half-housing
1b - Back half-housing
2 - Bicycle wheel
2a - Wheel tyre (2)
2b - Wheel rim (2)
2c - Wheel spokes (2)
3 - Housing opening (1)
4 - Lock body
5 - Key lock
5a - Locking key
6 - Eccentric lock edge (5)
7 - Locking arc
8 - Helical tension spring
9 - Pulling element
10 - Front armour
11 - Back armour
12 - Top armour
13 - Arched plate
14 - Means of joining the locking arc and the arched plate (7-13)
15 - Arched armour
16 - Peripheral edge of the front half-housing
17 - Peripheral edge of the back half-housing
18 - Lever in lock (5)
19 - Loop padlock termination
20 - Front external armour
21 - Back external armour

### PRESENTATION OF A PREFERRED EMBODIMENT

In relation to the drawings and references mentioned above, the attached figures show a preferred method of realisation of a bicycle padlock, type "ring lock", which, as detailed in the German public domain patent DE 26 04 732 C3, is based on the general structure comprising an annular housing (1) that is fixed on the bicycle chassis in such a way that it widely surrounds the section of one of its wheels (2) comprising the tyre (2a) and the rim (2b), whose annular housing (1) presents an opening (3) of sufficient size to permit passage across said tyre (2a) and, diametrically opposite this opening (3), the annular housing (1) presents a locking body (4) that is arranged tangentially and which incorporates a key (5a) lock (5) which, by means of an eccentric edge (6), is capable of blocking, at least, a locked padlock position in which a locking arc (7), which was previously housed inside said annular housing (1), by means of the retracting elastic action of a helical tension spring (7), is impelled by means of an external pulling element (9) to partially lean until it has crossed between the spokes (2c) of the wheel (2), closing said opening (3), describing below as the front the visible face of the padlock installed on the bicycle and as the back or rear its face applied to the chassis, said annular housing (1) consisting of the conjunction of a front half-housing (1a) and a back half-housing (1b).

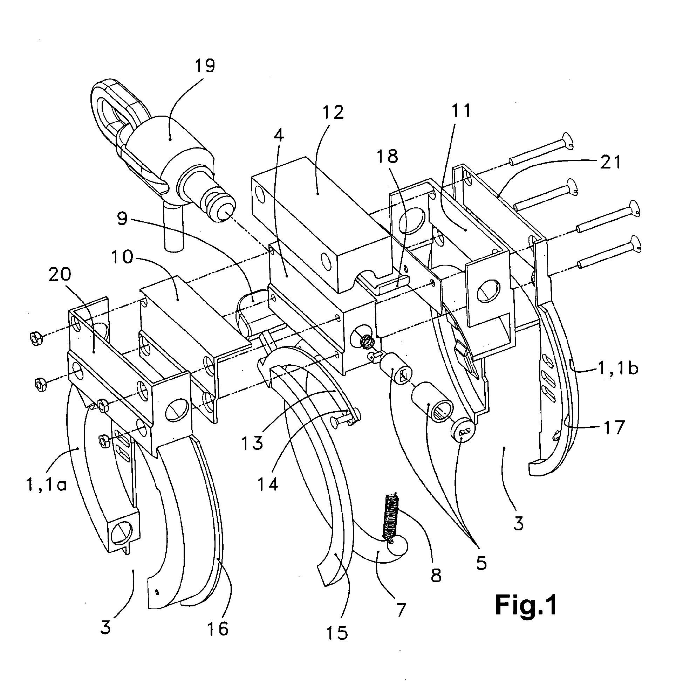

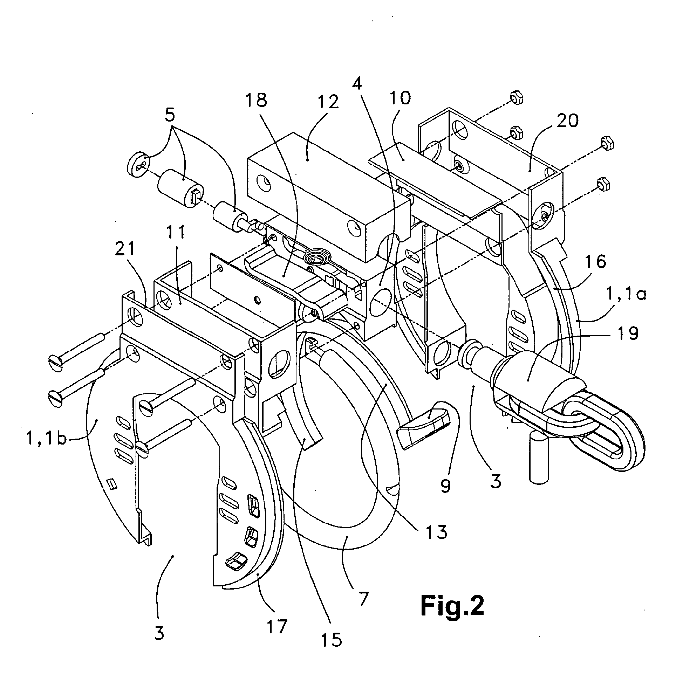

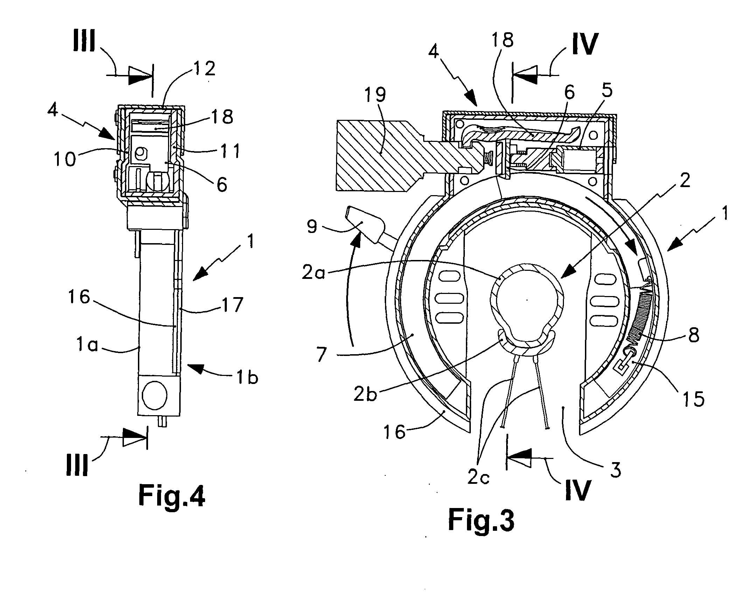

As clearly illustrated in Figures 1 and 2, in the padlock according to the invention said locking body (4) is covered by a hardened steel armour that consists of a front armour (10), a rear armour (11) and a top armour (12); because said external pulling element (9) is incorporated in the extreme of an arched plate (13) that extends parallel to the locking arc (7) with an effective length that is adequate for the distance covered by it and, at its other end, this arched plate (13) has means of connection (14) that are shared with the extreme of said arc (7) which, in turn, is linked to a termination of said tension spring (8) whose other termination is anchored inside the annular housing (1); and because, over all the extension embraced by the tension spring (8) there is an arched armour (15) that is inserted between the traction spring proper (8) and the front wall of the front half-housing (1a); where, as can be seen in Figures 3 and 4, said front armour (10) covers the top and rear faces of the locking body (4) and also internally covers the inside wall of the annular housing (1) over the entire zone corresponding to the vertical projection of this locking body (4), and said top armour (12) has the shape of an inverted box that externally covers the front (10) and rear (11) armours, embracing the entire lateral contour of the locking body (4). In conformity with this, the locking mechanisms are reinforced to prevent attacks using a drill or saw. To improve the robustness of the combination of said front (1a) and rear (1b) half-housings, they are made of metal of a considerable thickness and are joined by welding; the locking arc is also more resistant and thicker than usual.

The welded joint affords better anti-theft security than the riveted one used up to now, it being intended to weld in the most sensitive zones or even throughout the joint uniting the front (1a) and rear (1b) half-housings. For this welded construction, it is intended to employ laser welding to avoid damaging the components that are to be galvanised and, once assembled, are not accessible for painting or elimination of damage caused by other welding systems. In this respect, one particularity of the invention consists of the fact that, towards the outside, said front (1a) and rear (1b) half-housings form respective peripheral edges (16, 17) that are capable of resting on one another and of being joined by welding; this solution makes it possible to use not only laser welding, but also other traditional methods such as spot welding, which affects a small localised zone that is external and at a distance from the internal mechanisms of the annual half-housing (1) and which, in all cases, could be the object of later repair of the zone affected by each welding spot by painting or by other means.

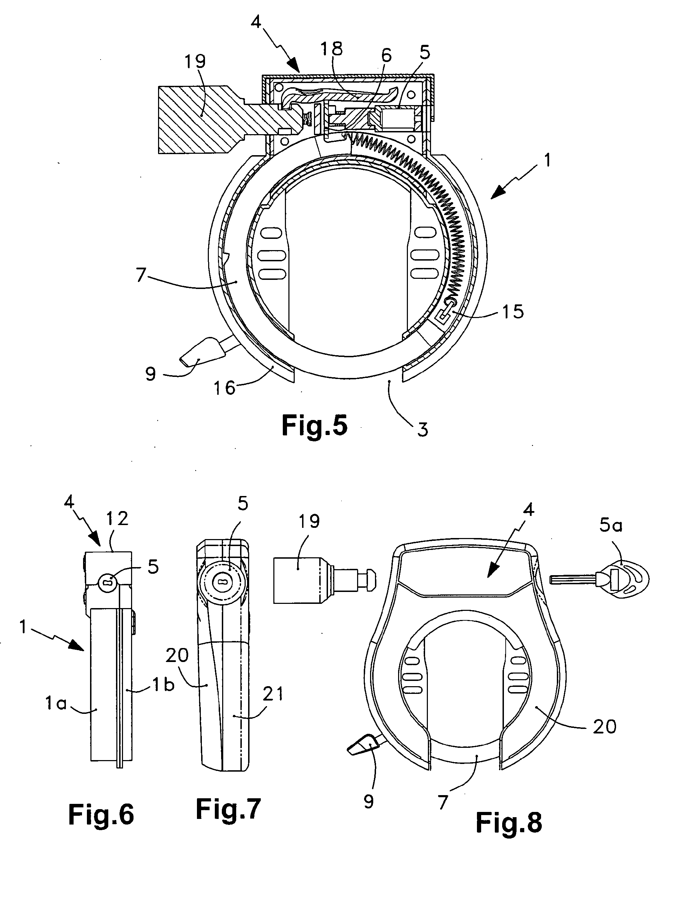

Figures 3 and 5 show the additional and secondary depiction of the padlock belonging to this invention; in operative conjunction with said key (5a) lock (5), in said locking body (4) there is a lever (18) that is capable of blocking, inside it, a typical termination (19) of a locking loop padlock; this not only makes it possible to immobilise turning of the wheel (2), but also to secure the complete vehicle to any external static means.

Also according to the invention, there are two (Figures 7 and 8) external armours, front (20) and rear (21). Evidently, the enveloping reinforcement formed by the front armour (10), the rear armour (11) and the top armour (12), can be distributed in terms of its folds in any other way as long as it embraces the entire perimeter of the locking body.

## Claims

1. - Bicycle padlock, comprising an annular housing (1) that is fixed on the bicycle's chassis in such a way that it widely surrounds the section of one of its wheels (2) comprising the tyre (2a) and the rim (2b), whose annular housing presents an opening (3), of sufficient size to permit passage through said tyre (2a) and, diametrically opposite to this opening (3), the annular housing (1) presents a locking body (4) that is tangentially arranged to it and which incorporates a key (5a) lock (5) which, by means of an eccentric edge (6), is capable of preventing, at least, a closed padlock position in which a locking arc (7), which was previously housed inside said annular housing (1) by the elastic retracting action of a helical tension spring (8), this internal locking arc (7) is impelled by means of an external pulling element (9) so as to partially protrude until it crosses between the wheel (2) spokes (2c), closing said opening, described below as the front or rear visible face of the padlock installed on the bicycle and as the back or rear face the one applied to its chassis, said annular housing (1) consisting of the combination of a front half-housing (1a) and a back half-housing (1b), **characterised in that** said locking body (4) is covered by a hardened steel armour that consists of a front armour (10), a rear armour (11) and a top armour (12); because said external pulling element (9) is incorporated in the extreme of an arched plate (13) that extends parallel to the locking arc (7) with an effective length that is adequate for the distance covered by it and, at its other end, this arched plate (13) has means of connection (14) that are shared with the extreme of said arc (7) which, in turn, is linked to a termination of said tension spring (8) whose other termination is anchored inside the annular housing (1); and because, over all the extension embraced by the tension spring (8) there is an arched armour (15) that is inserted between the traction spring proper (8) and the front wall of the front half-housing (1a).

2. - Bicycle padlock, in conformity with the first claim, **characterised in that** said front armour (10) covers the top and rear faces of the locking body (4) and also internally covers the inside wall of the annular housing (1) over the entire zone corresponding to the vertical projection of this locking body (4), and said top armour (12) has the shape of an inverted box that externally covers the front (10) and rear (11) armours, embracing the entire lateral contour of the locking body (4).

3. - Padlock for bicycles, in conformity with the previous claims, **characterised in that** said front (1a) and back (1b) half-housings are made of metal of a considerable thickness and are joined by welding.

4. - Padlock for bicycles, in conformity with the previous claims, **characterised in that**, towards the outside, said front (1a) and rear (1b) half-housings form respective peripheral edges (16, 17) that are capable of resting on one another and of being joined by welding.

5. - Padlock for bicycles, in conformity with the previous claims, **characterised in that** in operative conjunction with said key (5a) lock (5), in said locking body (4) there is a lever (18) that is capable of blocking, inside it, a typical termination (19) of a locking loop padlock.

6. - Padlock for bicycles, in conformity with the previous claims, **characterised in that** there are two external front (20) and back (21) external armours.
